(19) Europäisches Patentamt

European Patent Office

Office européen des brevets

(11) Publication number: **0 262 787 B1**

(12) **EUROPEAN PATENT SPECIFICATION**

(45) Date of publication of patent specification: **05.02.92**  (51) Int. Cl.5: **F16H  1/32**

(21) Application number: **87307509.7**

(22) Date of filing: **25.08.87**

(54) **Differential gear arrangement.**

(30) Priority: **27.09.86 GB 8623279**

(43) Date of publication of application:
**06.04.88 Bulletin  88/14**

(45) Publication of the grant of the patent:
**05.02.92 Bulletin  92/06**

(84) Designated Contracting States:
**DE FR GB IT SE**

(56) References cited:
**AT-B- 146 099        CH-A- 254 056
DE-C- 278 166        FR-A- 1 405 553
US-A- 1 619 127      US-A- 1 740 010
US-A- 2 795 155**

(73) Proprietor: **LUCAS INDUSTRIES public limited
company
Great King Street
Birmingham, B19 2XF West Midlands(GB)**

(72) Inventor: **Schofield, Clifford Raymond
20 Woodland Rise
Studham LU6 2PF(GB)**

(74) Representative: **Cuddon, George Desmond et
al
MARKS & CLERK Alpha Tower Suffolk Street
Oueensway
Birmingham B1 1TT(GB)**

## Description

This invention relates to a differential gear arrangement, particularly for use in a constant speed drive system for an electric generator.

It is known, for example from GB-A-1586963, to provide an electric generator arrangement in which an alternator is driven by an input shaft by way of differential epicyclic gearing. The gearing has a second input whose speed can be varied to maintain a constant speed of the alternator over a wide range of speeds of the input shaft. The epicyclic gear arrangement typically includes a sun gear, a ring gear, a planet gear meshing with the sun and ring gears, and a carrier for the planet gear.

An electric generator of the foregoing kind is principally intended for use in 400 Hz aircraft electric power systems, with consequent requirement for minimum volume and weight. The relatively small size has the effect that if conventional epicyclic gearing is used the planet pinions must be mounted on a carrier by means of plain bearings which require constant lubrication. The required small size and weight of the arrangement also imposes difficulties in providing a constant supply of lubricant. The alternator typically has a two-pole rotor, whereby the differential gearing must have an output speed of 24,000 r.p.m. to effect the 4000 Hz alternator output. At such speeds the use of plain bearings having an intermittent supply of lubricant is unsatisfactory.

One method of overcoming the foregoing problems is to provide an annular planet gear of sufficient diameter to be supported by rolling bearings without increasing the overall size of the arrangement. The term rolling bearings used herein is to be understood as including both ball and roller bearings. It is however necessary that the sun gear, ring gear and planet carrier shall all be provided with means for effecting a driving connection to devices external to the gear arrangement.

US-A-1740010 discloses an epicyclic gear arrangement having an annular planet gear and a carrier which comprises a plurality of parts, the planet gear being supported between two of those parts. In such an arrangement it would be difficult or impossible to align the planet bearings on the carrier parts with the precision needed for high speeds and substantial loads.

US-A-2795155 discloses an epicyclic gear arrangement having an annular planet gear which is journalled on one part of a multi-part carrier. In that reference, however the construction is such that the planet extends in cantilever fashion from its journal on the carrier to the zones of its mesh with the sun and ring gears. Such an arrangement would also be unsatisfactory for high loads and high speeds.

It is an object of the invention to provide an epicyclic differential gear arrangement in which the foregoing problems are overcome.

According to the invention there is provided a differential epicyclic gear arrangement comprising a housing, a ring gear, an annular planet gear having external teeth meshing with said ring gear and internal teeth meshing with said sun gear, said sun and ring gears having means for making driving engagement with devices external to the arrangement, and a carrier for supporting said planet gear for rotation of the axis thereof about the axes of said sun and ring gears, said carrier comprising a first part journalled externally of the ring gear and having teeth for driving engagement by a device external to the arrangement, and a second part in which said planet gear is journalled at two axially spaced locations on respective opposite sides of the zones of mesh between said planet and ring gear and between said planet and sun gear.

An embodiment of the invention will now be described by way of example only and with reference to the accompanying drawings in which:-

Figure 1 is a diagram of an electric generator arrangement,

Figure 2 is a section through epicyclic gearing forming part of the arrangement of Figure 1, and

Figure 3 is a section on line 3-3 in Figure 2.

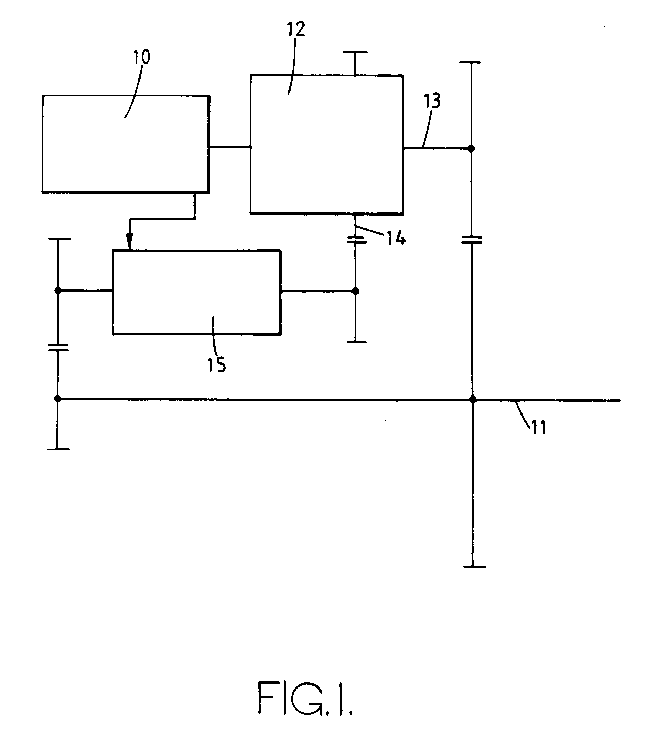

As shown in Figure 1 an electric generator arrangement of the type generally known from British Patent 1586963 includes an alternator 10 driven by an input shaft 11 through a differential epicyclic gear arrangement 12.

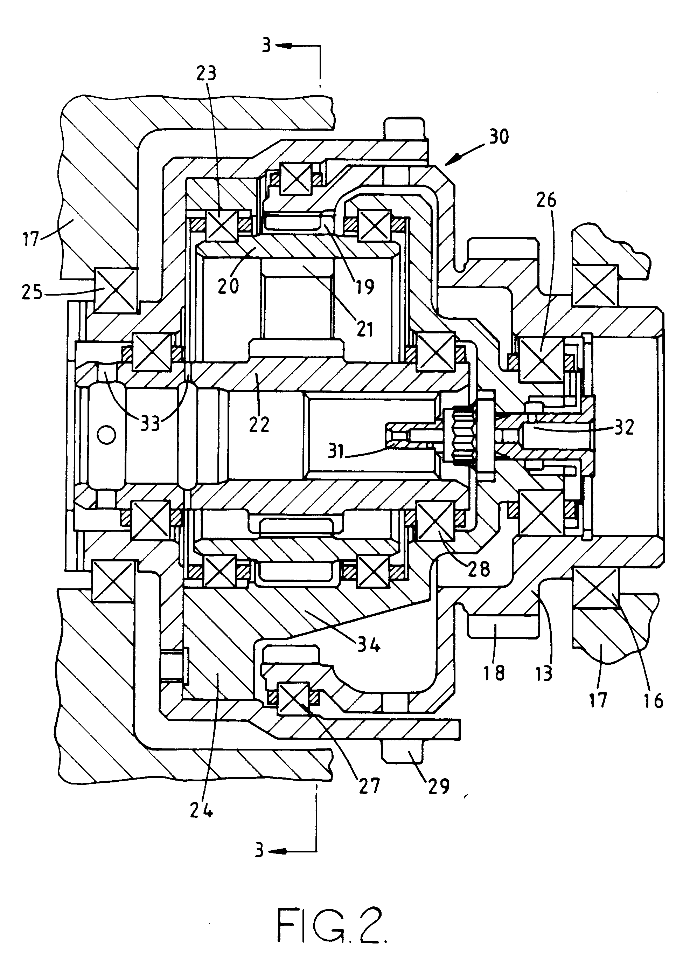

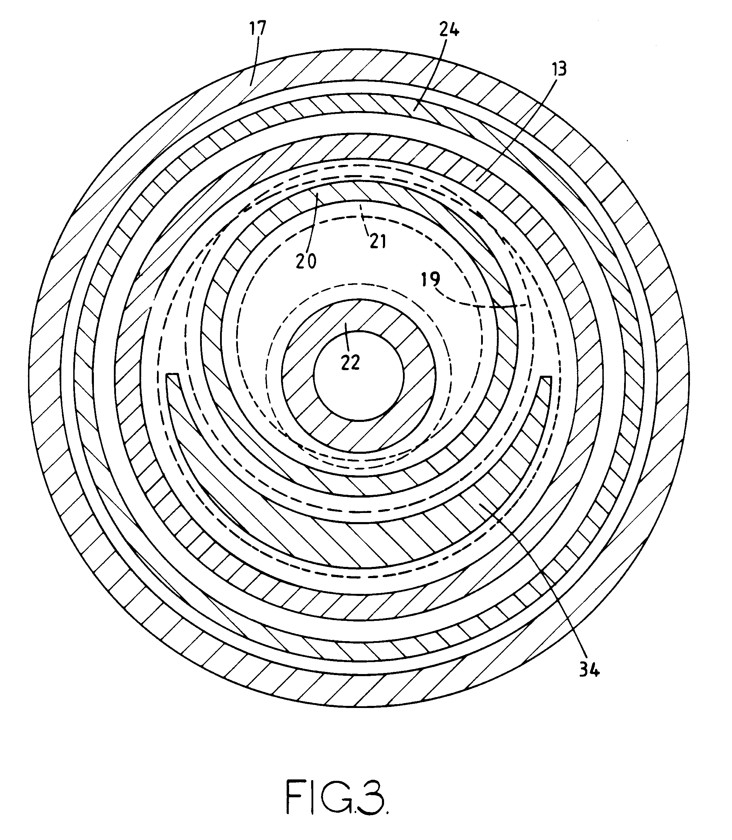

The arrangement 12 has one of its inputs 13 driven through fixed gears by the shaft 11 and the other of its inputs 14 driven by the shaft 12 through a variable stroke hydraulic pump and motor combination 15. The stroke of the pump and motor combination 15, and hence the speed of the input 14 is dependent on the rotor speed of the alternator 10. The alternator 10 is required to be driven at a high speed, typically 24000 rpm so that the use of plain bearings in the arrangement 12 is precluded unless a constant and adequate supply of lubricant can be provided. Typically lubricant in such a system is derived from part of a coolant supply to the alternator and may fluctuate. Figures 2 and 3 show a differential gear arrangement 12 which permits the use of rolling bearings throughout and in which centrifugal forces on the components may be reduced. The term rolling bearings used herein is to be understood as including both ball and roller bearings.

As shown in Figures 2 and 3 the first input element 13 is provided by a ring gear which is journalled in roller bearings 16 in part of a housing 17. The ring gear 13 has external teeth 18 through which drive is applied from the shaft 11. The ring gear 13 meshes with external teeth 19 on an annular planet gear 20 having internal teeth 21 which mesh with a sun gear 22. The planet gear 20 is journalled eccentrically of the ring gear 13 and sun gear 22 by means of roller bearings 23 within a carrier 24 which is journalled by a roller bearing 25 within a further part of the housing 17 and by a roller bearing 26 within the ring gear 13. A further roller bearing 27 is located between the carrier 24 and ring gear 13. The sun gear 22 is journalled by roller bearings 28 within the carrier 24. The carrier 24 has external teeth 29 through which the second input 14 from the hydraulic pump and motor combination 15 (Figure 1) is applied. The difference between the pitch circle diameters of the ring gear 13 and the external teeth 19 of the planet gear 20 is equal to the difference between the pitch circle diameters of the internal teeth 21 and the sun gear 22, and also equals the eccentricity of the axis of the planet gear 20 with respect to the axes of the ring gear 13 and sun gear 22.

It will be apparent that the carrier 24 is constructed in two parts, and has an opening 30 through which the ring gear 13 may engage the planet gear 20. This construction provides a crescent-shaped portion 34 between the ring gear 13 and the planet gear 20, as shown more clearly in Figure 3. The sun gear 22 has an axial through bore into which is directed a nozzle 31 mounted in the carrier 24 and through which lubricant is, in use, introduced, this lubricant passing radially outwards through bores 32 in the nozzle 31 and bores 33 in the sun gear 22.

The construction shown enables bearings of large diameter to be used at all points of the arrangement. Considerations of space which precluded roller bearings and required the use of plain bearings no longer exist. Separating forces which normally exist between meshing gear teeth will tend to urge the annular planet gear 20 towards a more concentric position relative to the gears 13, 22. These forces oppose the centrifugal force which tends to urge the gear 20 towards greater eccentricity, and thus reduce out of balance forces within the arrangement.

## Claims

1. A differential epicyclic gear arrangement comprising a housing (17), a ring gear (13), a sun gear (22), an annular planet gear (20) having external teeth meshing with said ring gear (13) and internal teeth meshing with said sun gear (22) and a carrier (24) for supporting said planet gear (20) for rotation of the axis thereof about the axes of said sun and ring gears (22,13), said sun and ring gears (22,13) having means for making driving engagement with respective devices (10,11) external to said arrangement, said carrier (24) comprising a first part journalled externally of said ring gear (13) and having teeth (29) for driving engagement by a device (15) external to the arrangement, and a second part (34) in which said planet gear (20) is journalled at two axially spaced locations on respective opposite sides of the zones of mesh between said planet and ring gear (20,13) and between said planet and sun gear (20,22).

2. An arrangement as claimed in claim 1 in which said second part (34) is a single, integral element.

3. An arrangement as claimed in claim 1 or claim 2 in which said second part (34) is journalled internally of said ring gear (13).

4. An arrangement as claimed in any preceding claim in which said first part is journalled externally of said ring gear (13) by a bearing (27) which lies in a plane between the planes of said axially spaced bearings (23).

5. An arrangement as claimed in claim 4 in which the plane of said bearing (27) for said first part on said ring gear (13) passes through said zones of mesh.

6. An arrangement as claimed in any preceding claim in which said first part of the carrier (24) and said ring gear (13) are journalled in said housing ((17).

7. An arrangement as claimed in any preceding claim in which said sun gear (20) is journalled in said carrier (24).

8. An arrangement as claimed in any preceding claim in which all journal bearings comprise rolling bearing devices.

## Revendications

1. Arrangement d'engrenage différentiel planétaire, comprenant un logement (17), une couronne de train planétaire (13), une roue solaire (22), un engrenage planétaire annulaire (20) muni de dents externes venant s'engrener avec ladite couronne de train planétaire (13), ainsi que de dents internes venant s'engrener avec ladite roue solaire (22), ainsi qu'un porte-pignons (24) destiné à supporter ledit engrenage planétaire (20) en permettant la rotation de l'axe de ce dernier autour des axes de ladite roue solaire et de ladite couronne de train planétaire (22, 13), ladite roue solaire et ladite couronne de train planétaire (22, 13) étant munies de moyens destinés à réaliser un engrènement d'entraînement avec des dispositifs externes (10, 11) à l'arrangement, ledit porte-pignons (24) comprenant une première partie montée sur paliers à l'extérieur de ladite couronne de train planétaire (13) et munie de dents (29) destinées à un engrènement d'entraînement avec un dispositif (15) externe à l'arrangement, ainsi qu'une seconde partie (34) dans laquelle ladite couronne de train planétaire (20) est montée sur paliers à deux endroits espacés en direction axiale sur les côtés opposés respectifs des zones de l'engrènement, entre ledit engrenage planétaire et ladite couronne de train planétaire (20, 13) et entre ledit engrenage planétaire et ladite roue solaire (20, 22).

2. Arrangement selon la revendication 1, dans lequel ladite seconde partie (34) est constituée d'un seul élément en une seule pièce.

3. Arrangement selon la revendication 1 ou 2, dans lequel ladite seconde partie (3) est montée sur paliers à l'intérieur de ladite couronne de train planétaire (13).

4. Arrangement selon l'une quelconque des revendications précédentes, dans lequel ladite première partie est montée sur paliers à l'extérieur de ladite couronne de train planétaire (13), à l'intervention d'un palier (27) qui se trouve dans un plan disposé entre les plans desdits paliers (23) axialement espacés.

5. Arrangement selon la revendication 4, dans lequel le plan dudit palier (17) destiné à ladite première partie sur ladite couronne de train planétaire (13) passe par lesdites zones d'engrènement.

6. Arrangement selon l'une quelconque des revendications précédentes, dans lequel ladite première partie du porte-pignons (24) et ladite couronne de train planétaire (13) sont montées sur paliers au sein dudit logement (17).

7. Arrangement selon l'une quelconque des revendications précédentes, dans lequel ladite roue planétaire (20) est montée sur paliers au sein dudit porte-pignons (24).

8. Arrangement selon l'une quelconque des revendications précédentes, dans lequel tous les paliers des tourillons sont constitués par des dispositifs de paliers à roulement.

**Patentansprüche**

1. Planetenräder-Ausgleichgetriebeanordnung, umfassend ein Gehäuse (17), ein Tellerrad (13), ein Zentralrad (22), ein ringförmiges Planetenrad (20) mit einer Außenverzahnung, die mit dem Tellerrad (13) kämmt, und mit einer Innenverzahnung, die mit dem Zentralrad (22) kämmt, und einen Planetenträger (24) zur Halterung des Planetenrades (20), so daß seine Achse um die Achsen des Zentral- und des Tellerrades (22, 13) umläuft, wobei das Zentral- und das Tellerrad (22, 13) Mittel aufweisen, um mit außerhalb der Anordnung befindlichen entsprechenden Einrichtungen (10, 11) in Antriebseingriff zu gelangen, wobei der Planetenträger umfaßt: einen ersten Teil, der außerhalb des Tellerrades (13) drehbar gelagert ist und eine Verzahnung (29) zum Antriebseingriff mit einer außerhalb der Anordnung befindlichen Einrichtung (15) hat, und einen zweiten Teil (34), in dem das Planetenrad (20) an zwei in Axialrichtung beabstandeten Stellen auf jeweils entgegengesetzten Seiten der Eingriffszonen zwischen dem Planetenrad und dem Tellerrad (20, 13) sowie zwischen dem Planetenrad und dem Zentralrad (20, 22) drehbar gelagert ist.

2. Anordnung nach Anspruch 1, wobei der zweite Teil (34) ein einziges integrales Element ist.

3. Anordnung nach Anspruch 1 oder 2, wobei der zweite Teil (34) im Inneren des Tellerrades (13) drehbar gelagert ist.

4. Anordnung nach einem der vorhergehenden Ansprüche, wobei der erste Teil außerhalb des Tellerrades (13) in einem Lager (27) drehbar gelagert ist, das in einer Ebene zwischen den Ebenen der in Axialrichtung beabstandeten Lager (23) liegt.

5. Anordnung nach Anspruch 4, wobei die Ebene des Lagers (27) für den ersten Teil an dem Tellerrad (13) durch die Eingriffszonen verläuft.

6. Anordnung nach einem der vorhergehenden Ansprüche, wobei der erste Teil des Planetenträgers (24) und das Tellerrad (13) in dem Gehäuse (17) drehbar gelagert sind.

7. Anordnung nach einem der vorhergehenden Ansprüche, wobei das Zentralrad (20) in dem Planetenträger (24) drehbar gelagert ist.

8. Anordnung nach einem der vorhergehenden Ansprüche, wobei sämtliche Achszapfenlager Wälzlagereinrichtungen aufweisen.

FIG.I.

FIG.2.

FIG.3.